(19) Europäisches Patentamt
European Patent Office
Office européen des brevets

(11) Publication number: 0 149 454 B1

(12) **EUROPEAN PATENT SPECIFICATION**

(45) Date of publication of patent specification: **21.12.88**

(51) Int. Cl.⁴: **C 08 K 5/00**, C 08 L 71/04 // (C08K5/00, 5:13, 5:34),(C08L71/04, 25:02)

(21) Application number: **85100060.4**

(22) Date of filing: **03.01.85**

(54) **Compositions of polyphenylene ether resin and high impact polystyrene resin having improved ultraviolet light resistance.**

(30) Priority: **13.01.84 US 570330**

(43) Date of publication of application: **24.07.85 Bulletin 85/30**

(45) Publication of the grant of the patent: **21.12.88 Bulletin 88/51**

(84) Designated Contracting States: **DE FR GB IT NL**

(56) References cited: **WO-A-81/02021**

(73) Proprietor: **GENERAL ELECTRIC COMPANY**
**1 River Road**
**Schenectady New York 12305 (US)**

(72) Inventor: **Bopp, Richard Charles**
**Box 249 Flatbush Road**
**West Coxsackie New York 12192 (US)**

(74) Representative: **Schüler, Horst, Dr. et al**
**Kaiserstrasse 69**
**D-6000 Frankfurt/Main 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 149 454 B1

**Description**

Background of the Invention

The polyphenylene ether (oxide) resins are high performance engineering thermoplastics possessing relatively high melt viscosities and softening points, and which are useful in many commercial applications requiring high temperature resistance, including the formation of films, fibers and molded articles. The polyphenylene ether resins and methods of their preparation are described in U.S. Patent Nos. 3,306,874 and 3,306,875 (Hay), U.S. Patent Nos. 3,257,357 and 3,257,358 (Stamatoff), and elswhere.

The polyphenylene ether resins are also known to be admixable with polystyrene resins, unmodified or modified with rubber, as disclosed in U.S. Patent No. 3,383,435 (Cizek), to form blends which are extrudable or moldable into articles of various shapes and sizes.

Polyphenylene ethers are normally prone to undergoing discoloration, that is, yellowing, during processing at elevated temperatures and, after molding, upon exposure to ultraviolet (UV) light for extended periods. To improve the color stability of these polymers, stabilizing additives are sometimes included. For instance, Coopers, et al. In U.S. Patent No. 3,925,509 disclose blends of polyphenylene ether resin and high impact, rubber-modified polystyrene resin which have been modifed to be more ultraviolet light stable by adding a light absorbing compound selected from among hydroxybenzotriazoles, hydroxybenzophenones, and substituted derivatives thereof in combination with an organic nickel compound. In another case, Bennett in U.S. Patent No. 3,563,934 discloses that an alkanolamine or a morphaline can be incorporated in a polyphenylene oxide resin to improve the flow and the thermal color stability of the polymer during molding, and to permit lighter colored objects to be more easily molded from the polymer.

WO 81/02021 describes stabilized molding compositions which comprise polyphenylene ether resins and an amount of piperidine derivatives.

The utilization of polyphenylene ether resin blends in a wider variety of commercial articles increases the likelihood that the polymer will be exposed to sunlight or strong indoor light during use, the UV radiation in either of which can cause discoloration of the plastic. It is desirable, therefore, to find additional ways of improving the UV-stability of the polymer without sacrificing other important properties.

Peter H. C. Shu has determined that combinations of an alkoxybenzophenone and a hindered amine provide unusually good improvements in the ultraviolet light stability of polyphenylene ether resins and blends. This development is described in EP—A—146 878.

Introduction to the Invention

The present invention is based on the discovery that certain alkoxybenzophenones not disclosed by Shu in combination with certain hindered amines provide very good ultraviolet light stability in polyphenylene ether resins and blends and, moreover, the stability is better than that obtained with the best specific embodiment described in EP—A—146 878. This is accomplished with good retention of other physical properties, including melt processability, impact strength, heat deflection temperature, and flame resistance (if present).

The present stabilizer combination, which is described in further detail below, is useful in the following compositions in accordance with the invention:

The stabilizer combination is useful especially in the following types of compositions in accordance with this invention:

1. Blends comprising (a) polyphenylene ether resin and (b) stabilizer;
2. Blends comprising (a) polyphenylene ether resin, (b) stabilizer and (c) rubber modified, high impact poly(alkenyl aromatic) resin;
3. Blends comprising (a) polyphenylene ether resin, (b) stabilizer and (c) plasticizer, with or without (d) an impact strength modifier;
4. Flame retardant versions of any of the foregoing; and
5. Filled versions of any of the foregoing.

Description of the Invention

The invention, in its broadest aspects, comprises an admixtures of (a) a polyphenylene ether resin or a polyphenylene ether resin modified with an alkenyl aromatic resin; and

(b) an amount of 0,5 to 10 parts by weight per 100 parts of (a) and (b) together of an ultraviolet light stabilizing combination of

(1) one or a mixture of two or more compounds having the formula

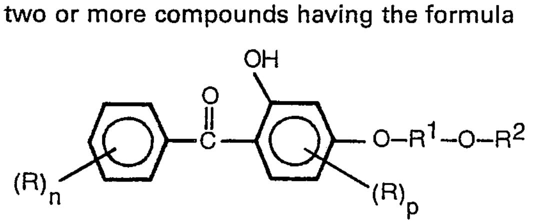

in which $R^1$ is alkylene and $R^2$ is straight or branched alkyl; each R is, independently, hydrogen, hydroxy, alkoxy having from 1 to about 10 carbon atoms, alkyl having from 1 to about 10 carbon atoms, or aryl; and n and p are independently zero or an integer from 1 to the total number of replaceable hydrogen atoms on the ring; and

(2) an amount from 0,05 to 5 parts by weight per 100 part of (a) and (b) together of one or a mixture of two or more compounds having the formula

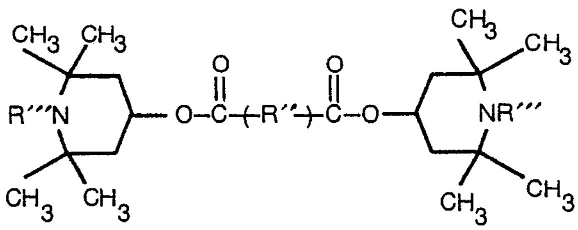

in which R'' is alkylene, straight or branched, or arylene un-substituted or substituted with, for instance, halogen, alkyl or alkoxy; and R''' is hydrogen or alkyl, but preferably hydrogen.

Compounds within Formula I above can be prepared by known methods. In one procedure, a 2,4-dihydroxybenzophenone is condensation reacted with the glycidyl ether of an alkyl-substituted alcohol, for example, 2-ethyl hexanol, in the presence of a small amount of the sodium salt of the dihydroxybenzophenone as the catalyst. The reaction is preferably conducted in solution in an organic solvent, for example, 2-methoxy ethanol, using an elevated temperature, for example about 100°C.

Hindered amine compounds within Formula II above which are tetraalkyl dipiperidinyl aliphatic diesters, can be prepared by referring to the procedures described in U.S. Patent No. 3,640,928 (Murayama, et al.).

Preferably, component (b) (1) is included in a major amount and component (b)(2) in a minor amount, based on the total weight of (b). In general, (b)(1) is present in amoungs of from about 0.5 to about 10 parts by weight, and (b)(2) in amounts of from about 0.05 to about 2 parts by weight, for each 100 parts of resin components. Larger amounts can be employed and may actually be desirable in some instances, but for most purposes the aforementioned proportions will be sufficient to achieve satisfactory results.

Preferred polyphenylene ether resins are homopolymers or copolymers having units of the formula

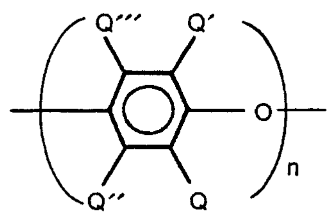

in which Q, Q', Q'' and Q''' are, independently, selected from the group consisting of hydrogen, halogen, hydrocarbon radicals, halohydrocarbon radicals, hydroxycarbonoxy radicals, and halohydrocarbonoxy radicals; and n represents the total number of monomer units and is an integer of at least about 20, and more usually at least 50.

The polyphenylene ether resins are, in general, self-condensation products of monohydric, monocyclic phenols produced by reacting the phenols, with oxygen in the presence of complex metal catalysts with the molecular weight being controlled by the reaction time, longer times providing a higher average number of repeating units. Particular procedures are known to those skilled in the art and are described in the patent literature, including the Hay and Stamatoff patents mentioned above.

Suitable phenolic monomers include but are not limited to: 2,6-dimethoylphenol; 2,6-diethylphenol; 2,6-dibutylphenol; 2,6-dilaurylphenol; 2,6-dipropylphenol; 2,6-diphenylphenol; 2-methyl-6-ethylphenol; 2-methyl-6-cyclohexylphenol; 2-methyl-6-tolylphenol; 2-methyl-6-methoxyphenol; 2-methyl-6-butylphenol; 2-6-dimethoxyphenol; 2,3,6-trimethylphenol; 2,3,5,6-tetramethylphenol; and 2,6-diethoxyphenol.

Some of the polymers which can be produced and which are within the above formula are: poly(2,6-dilauryl-1,4-phenylene)ether; poly(2,6-diphenyl-1,4-phenylene)ether; poly(2,6-dimethoxy-1,4-phenylene)-ether; poly(2,6-diethoxy-1,4-phenylene)ether; poly(2-methoxy-6-ethoxy-1,4-phenylene)ether; poly(2-ethyl-6-stearyloxy-1,4-phenylene)ether; poly(2,6-dichloro-1,4-phenylene)ether; poly(2-methyl-6-phenyl-1,4-phenylene)ether; poly(2,6-dibenzyl-1,4-phenylene)ether; poly(2-ethoxy-1,4-phenylene)ether; poly(2-chloro-1,4-phenylene)ether; and poly(2,6-dibromo-1,4-phenylene)ether.

Also included within the above formula are copolymers prepared from mixtures of phenolic monomers. Special mention is made of those based on the reaction of 2,6-dimethylphenol with other phenols, for example, with 2,3,6-trimethylphenol or 2-methyl-6-butylphenol, to produce the corresponding copolymer, for example, poly(2,6-dimethyl-co-2,3,6-trimethyl-1,4-phenylene) ether and poly(2,6-dimethyl-co-2-methyl-6-butyl-1,4-phenylene)ether.

Especially preferred for use in this invention are homopolymers having alkyl substituents in the two positions ortho to the oxygen ether atom, that is, those of the above formula in which Q and Q' are alkyl, and particularly alkyl having from 1 to 4 carbon atoms. Most preferred is poly(2,6-dimethyl-1,4-phenylene ether).

The preferred rubber modified, high impact alkenyl aromatic resins, when used, are those in which the alkenyl aromatic portion is derived at least in part from compounds of the formula

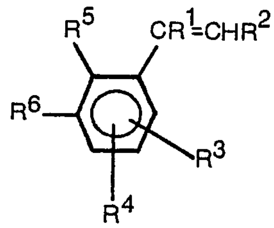

wherein $R^1$ and $R^2$ are selected from the group consisting of lower alkyl or alkenyl groups of from 1 to 6 carbon atoms and hydrogen; $R^3$ and $R^4$ are selected from the group consisting of halogen, that is, fluoro, iodo, chloro, bromo, hydrogen and lower alkyl of from 1 to 6 carbon atoms; R and R are selected from the group consisting of hydrogen and lower alkyl and alkenyl groups of from 1 to 6 carbon atoms, or $R^5$ and $R^6$ may be concatenated together with hydrocarbyl groups to form a naphthyl group.

Compounds within the above formula include styrene and its homologs and analogs. In addition to styrene, examples include alpha-methyl styrene, para-methyl styrene, 2,4-dimethyl styrene, chlorostyrene, dichlorostyrene, bromostyrene, dibromostyrene, fluoro or difluorostyrene, iodo or diiodostyrene, p-tert-butylstyrene, p-ethylstyrene, vinyl xylene, divinylbenzene, and vinyl naphthalene. Styrene is especially preferred.

Suitable rubber modifiers, which can be in admixture or interpolymerized with the alkenyl aromatic resin, include natural rubber, as well as synthetic rubbers such as polyisoprene, polybutadiene, polychloroprene, ethylene-propylene-diene terpolymers (EPDM rubber), styrene-butadiene copolymers (SBR rubber), styrene-acrylonitrile copolymers (SAN), ethylene-propylene copolymers (EPR rubber), acrylonitrile rubbers, polyurethane rubbers and polyorganosiloxane (silicone) rubbers.

The ratio of polyphenylene ether resin (a) to rubber modified high impact poly(alkylenyl)aromatic resin (c) can vary widely from a weight ratio between 5:95 and 95:5 and generally its rubber content will range in amount from about 5 to about 45% by weight, depending on particular requirements of impact resistant modification.

The plasticizer will generally be any high boiling liquid or low melting solid having the effect of softening the composition and reducing the glass transistion temperature of the polyphenylene ether resin. The plasticiser may be selected from among non-polymeric and polymeric materials known to exert these effects. By way of illustration, suitable types include linear aliphatic esters based on dibasic acids, such as adipates, azelates and sebacates, or linear aliphatic esters based on phosphorus. Other suitable types include cyclic esters, such as phthalates, terephthalates, benzoates and trimellitates.

Especially preferred are organic phosphate plasticizers, and particularly aromatic phosphate compounds of the formula

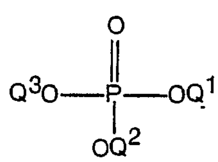

in which each Q represents the same of a different radical selected independently from among alkyl, cycloalkyl, aryl, alkyl-substituted aryl, aryl-substituted alkyl, halogen, and hydrogen, with at least one Q always being aryl.

Examples include phenylbisdodecyl phosphate, phenylbisneopentyl phosphate, phenylethylene hydrogen phosphgate, phenyl-bis-(3,5,5'-trimethylhexyl phosphate), ethyldiphenyl phosphate, 2-ethylhexyl di(p-tolyl phosphate, diphenyl hydrogen phosphate, bis(2-ethylhexyl) p-tolylphosphate, tritolyl phosphate, bis(2-ethylhexyl) phenyl phosphate, tri(nonyl-phenhyl)phosphate, phenylmethyl hydrogen phosphate, di(dodecyl)-p-tolyl phosphate, tricresyl phosphate, triphenyl phosphate, dibutylphenyl phosphate, 2-chloroethyldiphenyl phosphate, p-tolyl bis-(2,5,5'-trimethylhexyl)phosphate, 2-ethylhexyldiphenyl phosphate and diphenyl hydrogen phosphate. Most preferred are triphenyl phosphate and its derivatives, for example, isopropylated triphenyl phosphate.

Particular mention is also made of polymeric plasticizing resins, and especially polystyrene homopolymers, which have a plasticizing function and can be used for this purpose in the present blends.

In general, amounts of up to about 30 parts by weight, per 100 parts of the total polymeric ingredients, are employed in the plasticized embodiments, with particular amounts being dependent upon specific requirements.

Plasticized compositions in accordance with the invention can and often do also include effective amounts of an impact strength enhancing modifier or modifiers. These may be selected from polymeric materials customarily employed for this purpose. Typically, they will be copolymers or terpolymers of alkenyl aromatic compounds of the formula shown above with rubber or elastomeric precursors. Preferred are linear block, graft or radial teleblock copolymers or terepolymers of styrene and butadiene, or of styrene and isoprene, as well as hydrogenated versions thereof in which the unsaturation of the aliphatic portion has been reduced. The amounts are conventional.

Other ingredients can an often are included in the compositions. These may be selected from among the various materials customarily employed in polyphenylene ether resin blends, including flame retardant agents, mineral fillers (for example, clay, talc, mica or aluminum silicate), reinforcing agents (for example, glass fibers, flakes or spheres or titanate fibers), coloring agents (for example, dyes or pigments), plasticizers, odor suppressants, mold release agents, flow enhancing agents (for example, melt viscosity reducers), and so forth. Those may be employed singly or in various combinations, in amounts which are conventional.

The compositions of this invention may also be formulated to contain one or more flame retardant agents, alone or in combination with supplementary materials known to synergistically enhance there effect. Such additives may be selected from among the numerous materials known to those skilled in the art, which in general will be those compounds, or oligomers or polymers, containing chemical elements employed for their ability to impart flame resistance, for example, bromine, chlorine, antimony, phosphorus and nitrogen. Examples include various aliphatic and aromatic phosphates, phosphonates and phosphites; halogenated (brominated or chlorinated) organic compounds; halogenated organic compounds in admixture with antimony oxide; halogen-containing compounds in admixture with phosphorus compounds containing phosphorus-nitrogen bonds; halogenated (brominated or chlorinated) polymers such as polystyrene and aromatic polycarbonates or their lower molecular weight oligomeric counterparts.

Special mention is made of flame retardant organophosphate compounds, including aromatic phosphate flame retardant-plasticizers such as found among the compounds mentioned above; brominated or chlorinated bis-phenoxy alkanes, e.g., 1,2-bis(2,4,6-tribromophenoxy)ethane or 1,2-bis(2,3,4,5,6-pentabromophenoxy)ethane; di- or polyfunctional phosphates such as disclosed in British Patent No. 2,043,083; and brominated or chlorinated polystyrenes. Especially preferred are triphenyl phosphate and isopropylated triphenyl phosphate. Amounts of up to 30 parts by weight for each 100 parts of the polymeric components present in the blends are typical.

The compositions may be prepared into shaped articles in any convenient manner. In one procedure, the ingredients are dry or solution blended, the mixture is passed through a screw extruder at a temperature from about 232 (450) to about 343°C (650°F), the extrudate is cooled and chopped into pieces, and the pieces are injection molded at a temperature of from about 232 (450) to about 343°C (650°F).

The compositions may be prepared into any of the articles for which polyphenylene ether resins and blends are known. They are especially suitable for types of products intended for use in the outdoors where they will be exposed to the sun, or indoors under strong artificial light, either of which can change the original color of the plastic. Illustratively, the present kinds of blends can be manufactured into grilles, headlamp bezels, wheelcovers and decorative trim on automobiles, home laundry and dishwasher consoles, air conditioner grilles, personal care or home use products such as coffee makers, food processors, curling irons, and shower massagers, bases and housings for office business machines, TV cabinets, and so forth.

Description of the Drawings

FIGURE 2 is a plot of the change in yellowness index, ΔYI, versus the amount of exposure time, in hours, of molded blends in accordance with the invention (Examples 1, 2, 3 and control, below).

FIGURE 1 is a plot of the change in yellowness index, ΔYI, versus the exposure time in hours of prior art blends (Examples 1A, 2A, 3A and control below).

FIGURE 4 is a plot of the change in color, ΔE, versus exposure time in hours of the same blends in accordance with the invention as in Fig. 1.

FIGURE 3 is a plot of ΔE versus exposure time in hours of the same prior art blends as in FIG. 2.

FIGURES 5 and 6 are comparisons of the UV stability between both sets of blends with respect to ΔYI and ΔE, respectively.

Description of the Specific Embodiments

The invention is illustrated in the following examples. These are intended to show best or preferred embodiments and should not be construed as a limitation on the scope of the invention.

In the Examples, the UV resistance was measured by monitoring color change throughout the course of an exposure to a high intensity UV source. The exposure time to a prescribed objectionable color change is then used to judge the relative UV performance of different materials. More particularly, two sets of polyphenylene either resin formulations were prepared and test plaques molded from them were exposed

to xenon arc radiation under a glass filter of 0.13 inch thickness in an Altas Fadeometer. The UV irradiance at 420 nanometers(nm) was maintained at 1.47 watts/square meter. The black panel temperaure and relative humidity were controlled to 63°C. and 50%, respectively.

Tristimulus color measurements were made throughout the course of the test using a Gardner XL—23 colorimeter interfaced with a microcomputer. Color change was judged by monitoring the change in yellowness index (ASTM D1925) and total color change (CIELAB delta E). The relative UV performance of these materials was in turn determined by comparison of the relative exposure times to ΔYI = 1.0, to ΔE = 2.0. Averaged ΔYI values are presented in Tables 1 and 2 and in FIGURES 1 and 2. The corresponding comparisons of total color change vs. exposure are given in Tables 1 and 2, and in FIGURES 3 and 45. Comparison of the UV performance in the form of bar graphs are shown in FIGURES 5 and 6.

Examples 1—3

Compositions in accordance with this invention were prepared by forming an admixture of 40 parts by weight of poly(2,6-dimethyl-1,4-phenylene ether) resin (PPO®, General Electric Co.), 60 parts by weight of polybutadiene rubber-modified high impact polystyrene resin (Foster Grant's FG—834 HIPS), 13 parts by weight of isopropylated triphenyl phosphate flame retardant-plasticizer (KRONITEX® 50, FMC Corp.). 1.5 parts by weight of polyethylene (REXENE® 126), 0.15 part by weight of zinc oxide, 0.15 part by weight of zinc sulfide, 0.5 part by weight of tridecyl phosphite, 3.0 parts by weight of titanium dioxide, and an ultraviolet light stabilizer composed of a 2-hydroxy-4-hydroxylated alkyl ether-benzophenone (MARK 1535, Witco Chemical Co.) and 2,2,6,6-tetramethyl dipiperidinyl sebacate (TINUVIN®770, Ciba-Geigy Corp.) in the varying relative amounts shown.

Analysis of MARK 1535 by gas chormatography, mass spectroscopy and proton nuclear magnetic resonance indicated that it is composed of a mixture of at least two compounds having what appears to be the following respective structures:

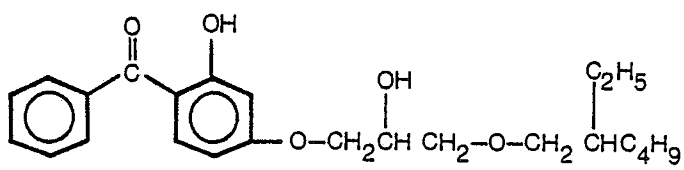

and

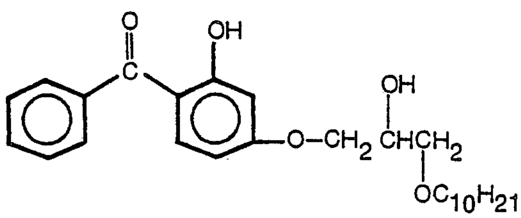

For comparison with the prior art, blends were prepared to contain the same ingredients in the same amounts as above, except that the color stabilizer was composed of, in combination, 2-hydroxy-4-n-octoxybenzophenone (CYASORB 531, American Cyanamid Co.) and TINUVIN 770. A control blend containing no stabilizer components was prepared for each set of blends.

The blends were extruded at 500°F. and injection molded at 450°F. into identical 2″ × 2″ test plaques, then tested with the results reported in Tables 1 and 2 below.

TABLE 1. Change in Yellowness Index, ΔYI, and color, ΔE, of Mark 1535 + Tin. 770 (This Invention)

| Ex. | Amt. Mark 1535 | Amt. Tin 770 | hrs. exp. to ΔYI=1 | hrs. exp. to ΔE=2 |
|---|---|---|---|---|
| Control | — | — | 112.0 | 200.0 |
| 1 | 2.0 | 0.2 | 232.0 | 288.0 |
| 2 | 3.0 | 0.3 | 432.0 | 496.0 |
| 3 | 4.0 | 0.4 | 640.0 | 120.0 |

TABLE 2. Change in Yellowness Index, ΔYI, and color, ΔE, of Cyasorb 531 and Tin 770 (Prior Art)

| Ex. | Amt. CYA 531 | Amt. Tin 770 | hrs. exp. to ΔYI=1 | hrs. exp. to ΔE=2 |
|---|---|---|---|---|
| Control | — | — | 88.0 | 166.0 |
| 1A* | 2.0 | 0.2 | 280.0 | 376.0 |
| 2A* | 3.0 | 0.3 | 296.0 | 424.0 |
| 3A* | 4.0 | 0.4 | 448.0 | greater than 500 |

*comparison

Example 3 above showed some bleaching early during the test, resulting in a ΔE value slightly greater than 2 at 120 hours but did not yellow beyond ΔE=2 after more than 700 hours of exposure.

All of the patents mentioned above are incorporated herein by reference.

Other modifications and variations of the invention are possible in the light of the above disclosure. For, instance, clay filled or glass reinforced versions of the blends are possible. It is to be understood, therefore, that changes may be made in the particular embodiments shown which are within the scope of the invention as defined in the appended claims.

**Claims**

1. A thermoplastic composition, comprising an admixture of (a) a polyphenylene ether resin or a polyphenylene ether resin modified with an alkenyl aromatic resin; and

(b) an amount of 0,5 to 10 parts by weight per 100 parts of (a) and (b) together of an ultraviolet light stabilizing combination of

(1) one or a mixture of two or more compounds having the formula

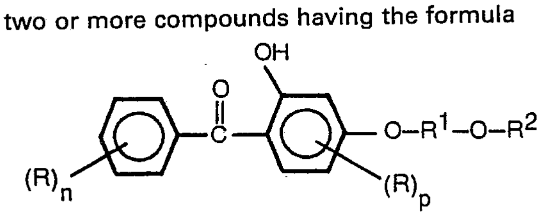

in which $R^1$ is alkylene and $R^2$ is straight or branched alkyl; each R is, independently, hydrogen, hydroxy, alkoxy having from 1 to about 10 carbon atoms, alkyl having from 1 to about 10 carbon atoms, or aryl; and n and p are independently zero or an integer from 1 to the total number of replaceable hydrogen atoms; and

(2) an amount from 0,05 to 5 parts by weight per 100 part of (a) and (b) together of one or a mixture of two or more compounds having the formula

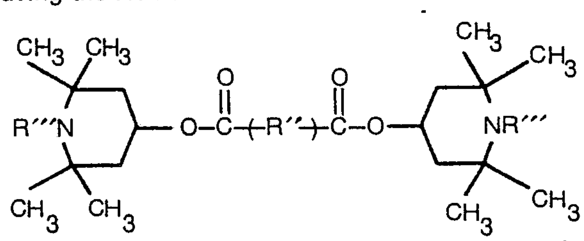

in which R'' is alkylene, straight or branched, or arylene un-substituted or substituted and R''' is hydrogen or alkylene.

2. A composition according to Claim 1, in which the polyphenylene ether resin is a homopolymer or copolymer having units of the formula

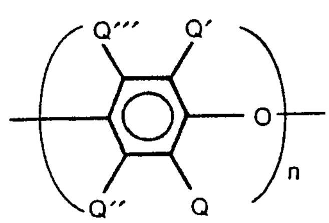

in which Q, Q', Q'' and Q''' are, independently, selected from the group consisting of hydrogen, halogen, hydrocarbon radicals, halohydrocarbon radicals, hydroxycarbonoxy radicals, and halohydrocarbonoxy radicals, and n represents the total number of monomer units and is an integer of at least about 20.

3. A composition according to Claim 1, in which the polyphenylene ether resin is poly(2,6-dimethyl-1,4-phenylene ether).

4. A composition according to Claim 1, in which (b)(1) is present in a major amount and (b)(2) is present in a minor amount, based on the weight of (b).

5. A composition to Claim 1, in which (b)(1) is a 2-hydroxy-4-hydroxylated alkyl ether-benzophenone or mixture of two or more such compounds.

6. A composition according to Claim 1, in which (b)(1) comprises a mixture of compounds having the following respective formulae in predominace:

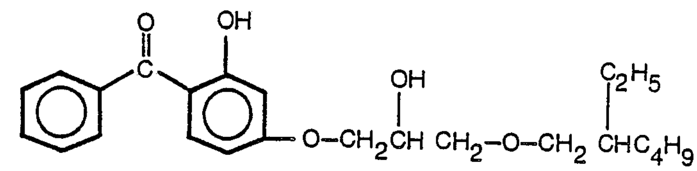

and

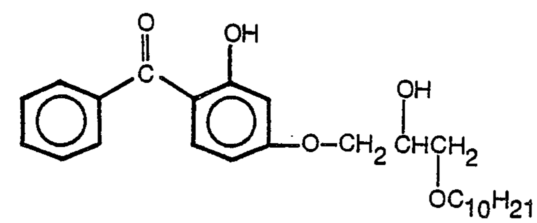

7. A composition according to Claim 1, in which (b)(2) is 2,2,6,6-tetramethyl dipoperidinyl sebacate.

8. A composition according to Claim 1, which includes (c) a rubber modified high impact (alkenyl aromatic) resin.

9. A composition according to Claim 8, in which the alkenyl aromatic resin is derived in part from compounds of the formula

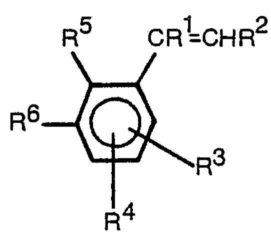

wherein $R^1$ and $R^2$ are selected from the group consisting of lower alkyl or alkenyl groups of from 1 to 6 carbon atoms and hydrogen; $R^3$ and $R^4$ are selected from the group consisting of halogen, hydrogen and lower alkyl of from 1 to 6 carbon atoms; $R^5$ and $R^6$ are selected from the group consisting of hydrogen and lower alkyl and alkenyl groups of from 1 to 6 carbon atoms, or $R^5$ and $R^6$ may be concatenated together with hydrocarbyl groups to form a naphthyl group.

10. A composition according to Claim 9, in which the alkenyl aromatic resin is polystyrene.

11. A composition according to Claim 10, in which the rubber modified for the polystyrene is polybutadiene.

12. A composition according to Claim 8, in which the ratio of polyphenylene ether resin (a) and rubber modified, high impact poly(alkenyl aromatic) resin (c) is between 5:95 and 95:5.

13. A composition according to Claim 1, which includes an effective amount of (c) a plasticizer, with or without an impact modifier.

14. A composition according to Claim 13, in which the plasticizer is present in an amount up to about 30 parts by weight per 100 parts of the polymeric components in the composition.

15. A composition according to Claim 13, in which the plasticizer is an aromatic phosphate compound.

16. A composition according to Claim 15, in which the aromatic phosphate is triphenyl phosphate.

17. A composition according to Claim 16, in which the triphenyl phosphate is isopropylated.

18. A composition according to Claim 13, which includes (d) an impact modifier.

19. A composition according to Claim 13, in which the impact modifier, (d), is a linear block, graft or radial teleblock copolymer or terpolymer of styrene and a diene, hydrogenated or non-hydrogenated.

20. A composition according to Claims 1, 8, 13 or 18, which includes a flame retardant amount of a flame retardant agent.

21. A composition according to Claim 20, in which the flame retardant agent is selected from among organic phosphates, brominated bis-phenoxy alkanes and halogenated polystyrenes.

22. A composition according to Claim 21, in which the flame retardant agent is an aromatic phosphate.

23. A composition according to Claim 22, in which the aromatic phosphate is isopropylated triphenyl phosphate.

24. A composition according to Claim 1, 8, 13, 18 or 20, which includes a mineral filler and/or glass reinforcement.

**Patentansprüche**

1. Thermoplastische Zusammensetzung enthaltend eine Mischung aus

(a) einem Polyphenylenätherharz oder einem Polyphenylenätherharz, welches mit einem alkenylaromatischen Harz modifiziert ist und

(b) eine Menge von 0,5 bis 10 Gewichtsteile pro 100 Gewichtsteile des Bestandteils (a) und (b) zusammen von einer Ultraviolett-Licht stabilisierenden Kombination aus

(1) einer oder einer Mischung aus zwei oder mehr Verbindungen mit der Formel

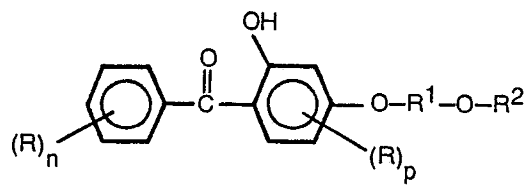

in der $R^1$ Alkylen ist und $R^2$ ein geradkettiges oder verzweigtes Alkyl ist; jedes R unabhängig Wasserstoff, Hydroxy, Alkoxy mit 1 bis etwa 10 Kohlenstoffatomen, alkyl mit 1 bis etwa 10 Kohlenstoffatomen oder Aryl ist und n und p unabhängig voneinander 0 oder eine ganze Zahl von 1 bis zur Gesamtzahl der ersetzbaren Wasserstoffatome sind und

(2) eine Menge von 0,05 bis 5 Gewichtsteile pro 100 Teile von (a) und (b) zusammen von einer oder einer Mischung aus zwei oder mehr Verbindungen mit der Formel

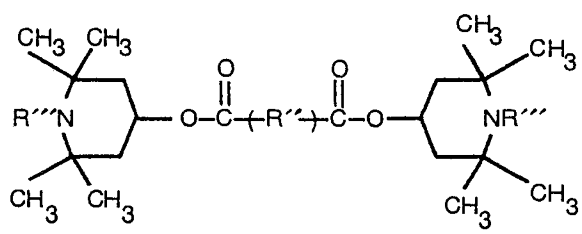

in welcher R'' geradkettiges oder verzweigtes Alkylen, oder unsubstituiertes oder substitutiertes Arylen ist und R''' ist Wasserstoff oder Alkyl.

2. Zusammensetzung nach Anspruch 1, in welcher das Polyphenylenätherharz ein Homopolymer oder Copolymer mit Einheiten der Formel

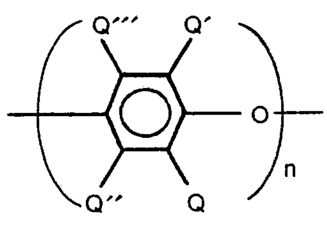

ist, in welcher Q, Q', Q'' und Q''' unahhängig voneinander ausgewählt sind aus der Gruppe, bestehend aus Wasserstoff, Halogen, Kohlenwasserstoffresten, Halogenkohlenwasserstoffresten, Kohlenwasserstoffoxyresten und Halogenkohlenwasserstoffoxyresten und n die Gesamtzahl der Monomereinheiten darstellt und eine ganze Zahl von wenigstens 20 ist.

3. Zusammensetzung nach Anspruch 1, in welcher das Polyphenylenätherharz Poly(2,6-dimethyl-1,4-phenylenäther) ist.

4. Zusammensetzung nach Anspruch 1, in welcher der Bestandteil (b)(1) in einer größeren Menge vorhanden ist und der Bestandteil (b)(2) in einer kleineren Menge, bezogen auf das Gewicht von (b) vorhanden ist.

5. Zusammensetzung nach Anspruch 1, in welcher der Bestandteil (b)(1) ein 2-Hydroxy-4-hydroxyliertes Alkyläther-Benzophenol oder eine Mischung aus zwei oder mehr solcher Verbindungen ist.

6. Zusammensetzung nach Anspruch 1, in welcher der Bestandteil (b)(1) überwiegend eine Mischung von Verbindungen mit den folgenden Formeln aufweist:

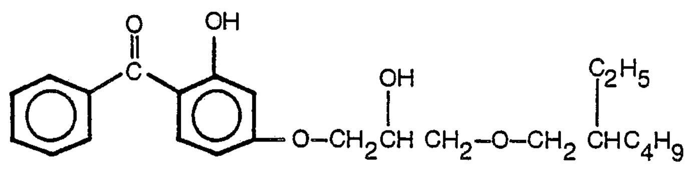

und

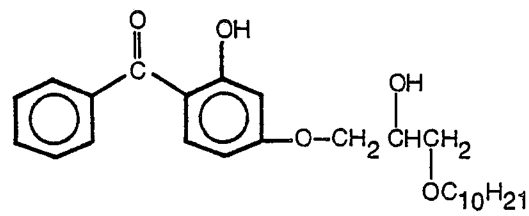

7. Zusammensetzung nach Anspruch 1, in welcher der Bestandteil (b)(2) 2,2,6,6-Tetramethyldipiperidinylsebacat ist.

8. Zusammensetzung nach Anspruch 1, die umfaßt:

(c) ein gummimodifiziertes hochschlagfestes Poly(alkenylaromatisches)Harz.

9. Zusammensetzung nach Anspruch 8, in welcher das alkenylaromatische Harz teilweise abgeleitet ist von Verbindungen der Formel

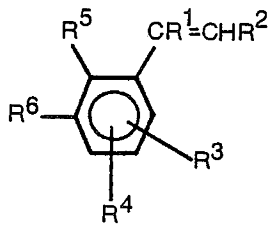

worin $R^1$ und $R^2$ ausgewählt sind aus der Gruppe, bestehend aus niederen Alkyl- oder Alkenylgruppen mit 1 bis 6 Kohglenstoffatomen und Wassestoff; $R^3$ und $R^4$ ausgewählt sind aus der Gruppe, bestehend aus Halgen, Wasserstoff und niederem Alkyl mit 1 bis 6 Kohlenstoffatomen; $R^5$ und $R^6$ ausgewählt sind aus der Gruppe, bestehend aus Wasserstoff und niederen Alkyl- und Alkenylgruppen mit 1 bis 6 Kohlenstoffatomen oder $R^5$ und $R^6$ über Kohlenwasserstoffgruppen miteinander verbunden sind, umeine Naphthylgruppe zu bilden.

10. Zusammensetzung nach Anspruch 9, in welcher das alkenylaromatische harz Polystyrol ist.

11. Zusammensetzung nach Anspruch 10, in welcher das Gummimodifizierungsmittel für das Polystyrol Polybutadien ist.

12. Zusammensetzung nach Anspruch 8, in welcher das Gewichtsverhältnis des Polyphenylenätherharzes (a) und des gummimodifizierten hochschlagfesten Poly(alkenylaromatischen)-Harzes (c) zwischen 5:95 und 95:5 liegt.

13. Zusammensetzung nach Anspruch 1, welche eine wirksame Menge von (c) einem Weichmacher mit oder ohne Schlagmodifizierungsmittel enthält.

14. Zusammensetzung nach Anspruch 13, in welcher der Weichmacher in einer Menge bis zu etwa 30 Gewichtsteilen pro 100 Teile der polymeren Bestandteile in der Zusammensetzung vorliegt.

15. Zusammensetzung nach Anspruch 13, in welcher der Weichmacher eine aromatische Phosphatverbindung ist.

16. Zusammensetzung nach Anspruch 15, in welcher das aromatische Phosphat Triphenylphosphat ist.

17. Zusammensetzung nach Anspruch 16, in welcher das Triphenylphosphat isopropyliert ist.

18. Zusammensetzung nach Anspruch 13, die enthält: (d) ein Schlagmodifizierungsmittel.

19. Zusammensetzung nach Anspruch 13, in welcher das Schlagmodifizierungsmittel (d) ein linearer Block-, Pfropf- oder Radial-Teleblock-Copolymer oder Terpolymer von Styrol und einem hydrierten oder nichthydrierten Dien ist.

20. Zusammensetzung nach den Ansprüchen 1, 8, 13 oder 18, die eine flammhemende Menge eines flammhemenden Mittels umfaßt.

21. Zusammensetzung nach Anspruch 20, in welcher das flammhemmende Mittel ausgewählt ist aus organischen Phosphaten, bromierten Bis-Phenoxyalkanen und halogenierten Polystyrolen.

22. Zusammensetzung nach Anspruch 21, in welcher das flammhemmende Mittel ein aromatisches Phosphat ist.

23. Zusammensetzung nach Anspruch 22, in welcher das aromatische Phosphat isopropyliertes Triphenylphosphat ist.

24. Zusammensetzung nach den Ansprüchen 1, 8, 13, 18 oder 20, die einen mineralischen Füllstoff und/ oder Glasverstärkungsmittel aufweist.

**Revendications**

1. Composition thermoplastique comprenant un mélange de

(a) un résine de poly(éther de phénylène) ou un résine de poly(éther de phénylène) modifiée avec une résine alcénylaromatique; et

(b) une quantité de 0,5 à 10 parties en poids pour 100 parties en poids de la somme de (a) et (b) d'une combinaison de stabilisation vis-à-vis de la lumière ultraviolette de

(1) un ou un mélange de deux ou plusieurs composés répondant à la formule

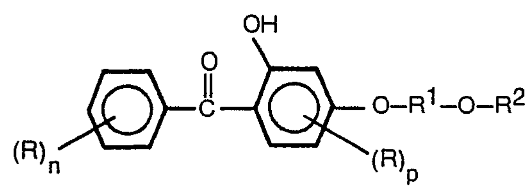

dans laquelle $R^1$ est un alkylène et $R^2$ est un alkyle droit ou ramifié; chaque R est indépendamment un hydrogène, un hydroxy, un alcoxy ayant de 1 à environ 10 atomes de carbone, un alkyle ayant de 1 à environ 10 atomes de carbone, ou un aryle; et n et p sont indépndamment 0 ou un eintier de 1 au nombre total de atomes d'hydrogène remplaçables; et

(2) une quantité de 0,05 à parties en poids, pour 100 parties de la somme de (a) et (b), d'un ou d'un ou d'un mélange de deux ou plusieurs composés répondant à la formule

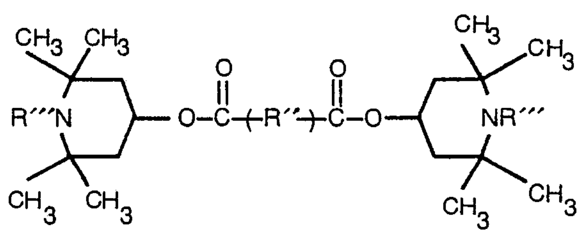

dans laquelle R'' est un alkylène droit ou ramifié ou un arylène non substitué ou substitué R''' est hydrogène ou un alkylène.

2. Composition selon la revendication 1, dans laquelle la résine de poly(éther de phénylène) est un homopolymère ou un copolymère ayant des motifs de formule

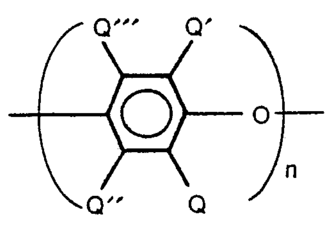

dans laquelle Q, Q', Q'' et Q''' sont indépendamment choisis dans le groupe constitué par un hydrogène, un halogène, les radicaux hydrocarbonés, les radicaux halogénohydrocarbonés, les radicaux hydrocarbonoxy et les radicaux halogénohydrocarbonoxy, et n représente le nombre total des motifs monomères et est un entier d'au moins 20.

3. Composition selon la revendication 1, dans laquelle la résine de poly(éther de phénylène) est un poly(éther de 2,6-diméthyl-1,4-phénylène).

4. Composition selon la revendication 1, dans laquelle (b)(1) est présent en une quantité majeure et (b)(2) est présent en une quantité mineure, relativement au poids de (b).

5. Composition selon la revendication 1, dans laquelle (b)(1) est une 2-hydroxy-4-éther alkylique hydroxylé-benzophénone ou un mélange de deux ou plusieurs de tels composés.

6. Composition selon la revendication 1, dans laquelle (b)(1) comprend un mélange de composés ayant de façon prédominante les formules respectives suivantes

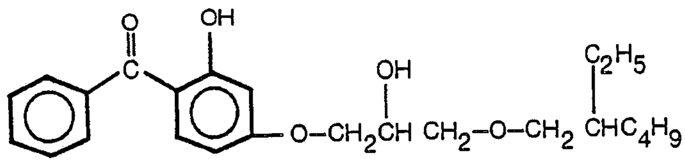

et

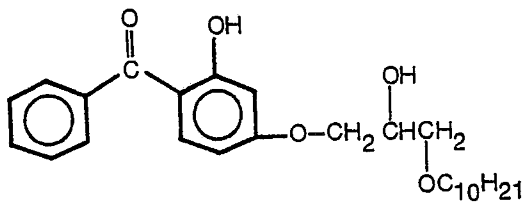

7. Composition selon la revendication 1, dans laquelle (b)(2) est le 2,2,6,6-tétraméthylsébacate de dipipéridinyle.

8. Composition selon la revendication 1, qui comprend (c) une résine poly(alcénylaromatique) choc modifiée avec un caoutchouc.

9. Composition selon la revendication 8, dans laquelle la résine alcénylaromatique dérive en partie de composés de formule

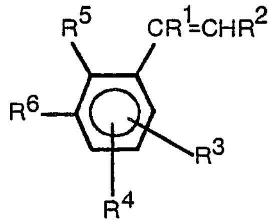

dans laquelle $R^1$ et $R^2$ sont choisis dans le groupe constitué par des groupes alkyles ou alcényles inférieures ayant de 1 à 6 atomes de carbone et l'hydrogène; $R^3$ et $R^4$ sont choisis dans le groupe constitué par un halogène, un hydrogène et un alkyle inférieure ayant de 1 à 6 atomes de carbone; $R^5$ et $R^6$ sont choisis dans la groupe constitué par un hydrogène et les groupes alkyles et alcényles inférieurs ayant de 1 à 6 atomes de carbone ou $R^5$ et $R^6$ peuvent être enchaînés avec des groupes hydrocarbyles pour former un groupe naphtyle.

10. Composition selon la revendication 9, dans laquelle la résine alcénylaromatique est le polystyrène.

11. Composition selon la revendication 10, dans laquelle la caoutchouc modifiant le polystyrène est un polybutadiène.

12. Composition selon la revendication 8, dans laquelle le rapport pondéral de la résine de poly(éther de phénylène) (a) à la résine poly(alcénylaromatique) choc modifiée avec un caoutchouc (c) est entre 5/95 et 95/5.

13. Composition selon la revendication 1, qui comprend une quantité efficace de (c) un plastifiant, evec ou sans unmodificateur de la résistance au choc.

14. Composition selon la revendication 13, dans laquelle le plastifiant est présent en une quantité pouvant atteindre environ 30 parties en poids pour 100 parties de composants polymères de la composition.

15. Composition selon la revendication 13, dans laquelle le plastifiant est un phosphate aromatique.

16. Composition selon la revendication 15, dans laquelle le phosphate aromatique est le phosphate de triphényle.

17. Composition selon la revendication 16, dans laquelle le phosphate de triphényle est isopropylé.

18. Composition selon la revendication 13, qui comprend (d) un modificateur de la résistance au choc.

19. Composition selon la revendication 13, dans laquelle le modificateur de la résistance au choc (d) est un copolymère ou terpolymère linéaire séquencé, greffé ou téléséquencé radial de styrène est d'un diène, hydrogéné ou non hydrogéné.

20. Composition selon les revendications 1, 8, 13 ou 18, qui comprend une quantité ignifuge d'une agent ignifuge.

21. Composition selon la revendication 20, dans laquelle l'agent ignifguge est choisi parmi les phosphates organiques, les bis-phénoxyalcanes bromés et les polystyrènes halogénés.

22. Composition selon la revendication 21, dans laquelle l'agent ignifuge est un phosphate aromatique.

23. Composition selon la revendication 22, dans laquelle le phosphate aromatique est le phosphate de triphényle isopropylé.

24. Composition selon la revendication 1, 8, 13, 18 ou 20, qui comprend une charge minérale et/ou un renfort de verre.

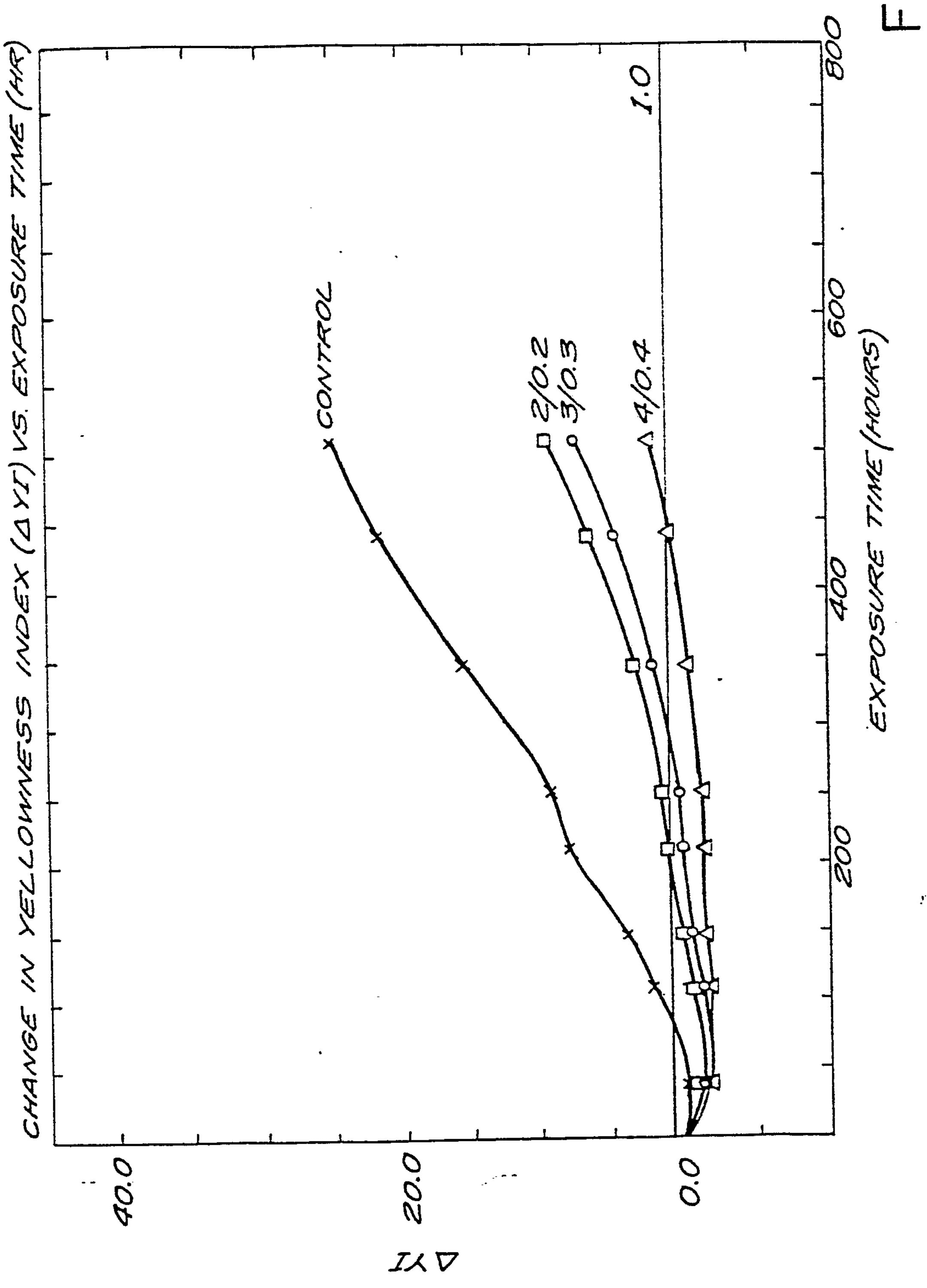
CHANGE IN YELLOWNESS INDEX (ΔYI) VS. EXPOSURE TIME (HR)
ΔYI
40.0
20.0
0.0
CONTROL
2/0.2
3/0.3
4/0.4
1.0
200
400
600
800
EXPOSURE TIME (HOURS)

FIG. 1

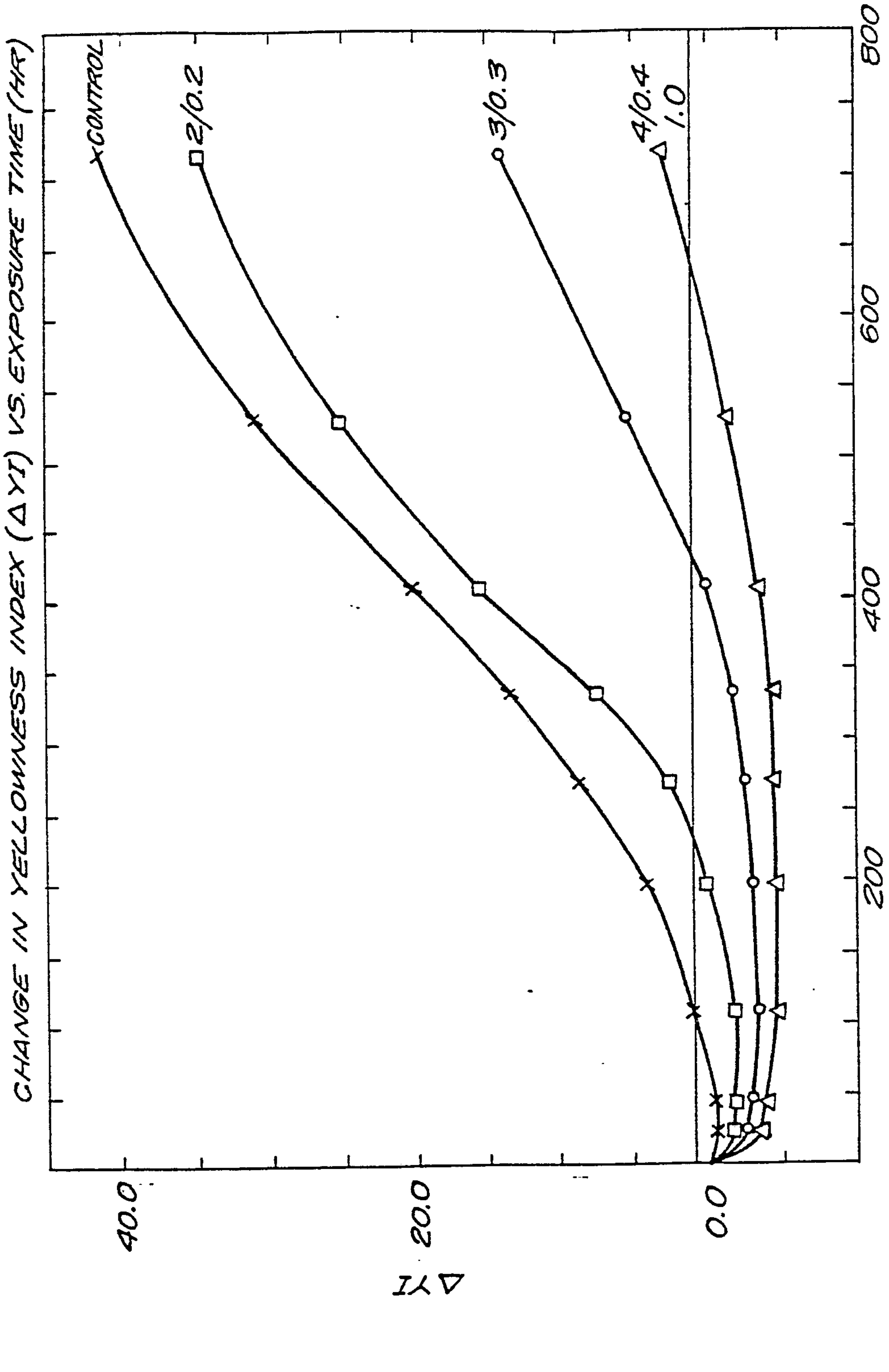
CHANGE IN YELLOWNESS INDEX (ΔYI) VS. EXPOSURE TIME (HR)
ΔYI
40.0
20.0
0.0
200
400
600
800
EXPOSURE TIME (HOURS)
CONTROL
2/0.2
3/0.3
4/0.4
1.0

FIG. 2

FIG. 3

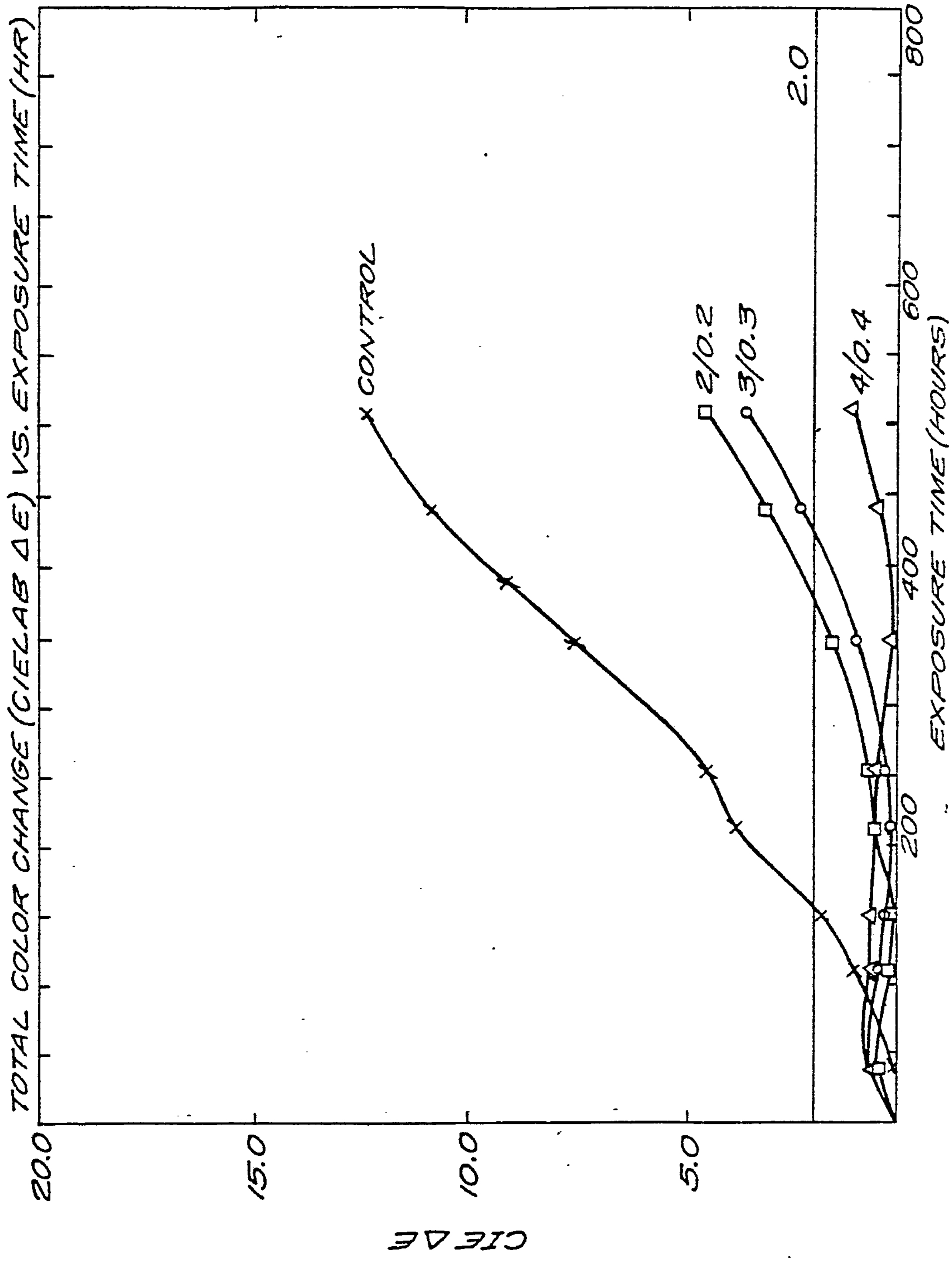
TOTAL COLOR CHANGE (CIELAB ΔE) VS. EXPOSURE TIME (HR)
CIE ΔE
20.0
15.0
10.0
5.0
2.0
CONTROL
2/0.2
3/0.3
4/0.4
200
400
600
800
EXPOSURE TIME (HOURS)

FIG. 4

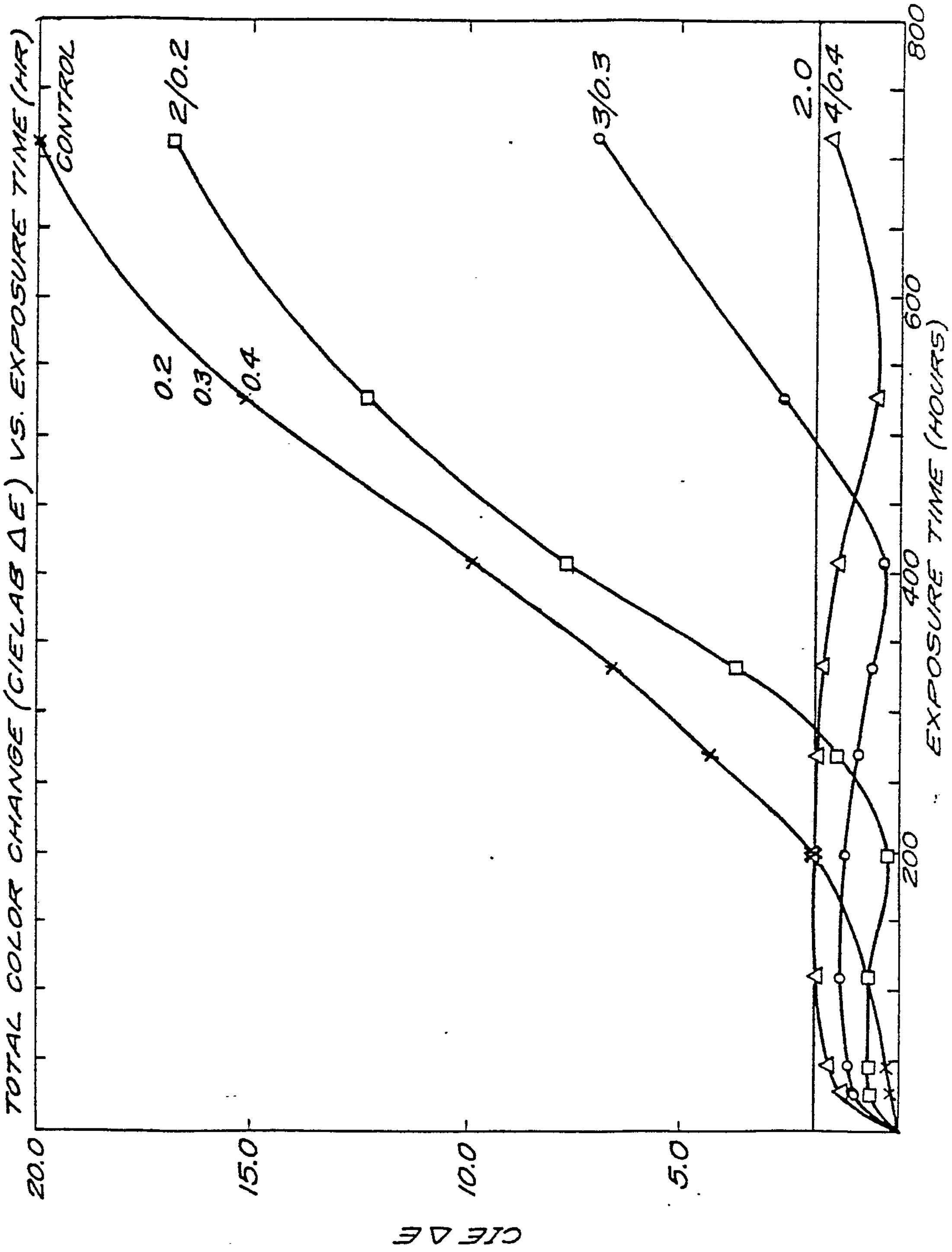
TOTAL COLOR CHANGE (CIELAB ΔE) VS. EXPOSURE TIME (HR)
CIE ΔE
EXPOSURE TIME (HOURS)
20.0
15.0
10.0
5.0
200
400
600
800
CONTROL
2/0.2
3/0.3
4/0.4
2.0
0.2
0.3
0.4

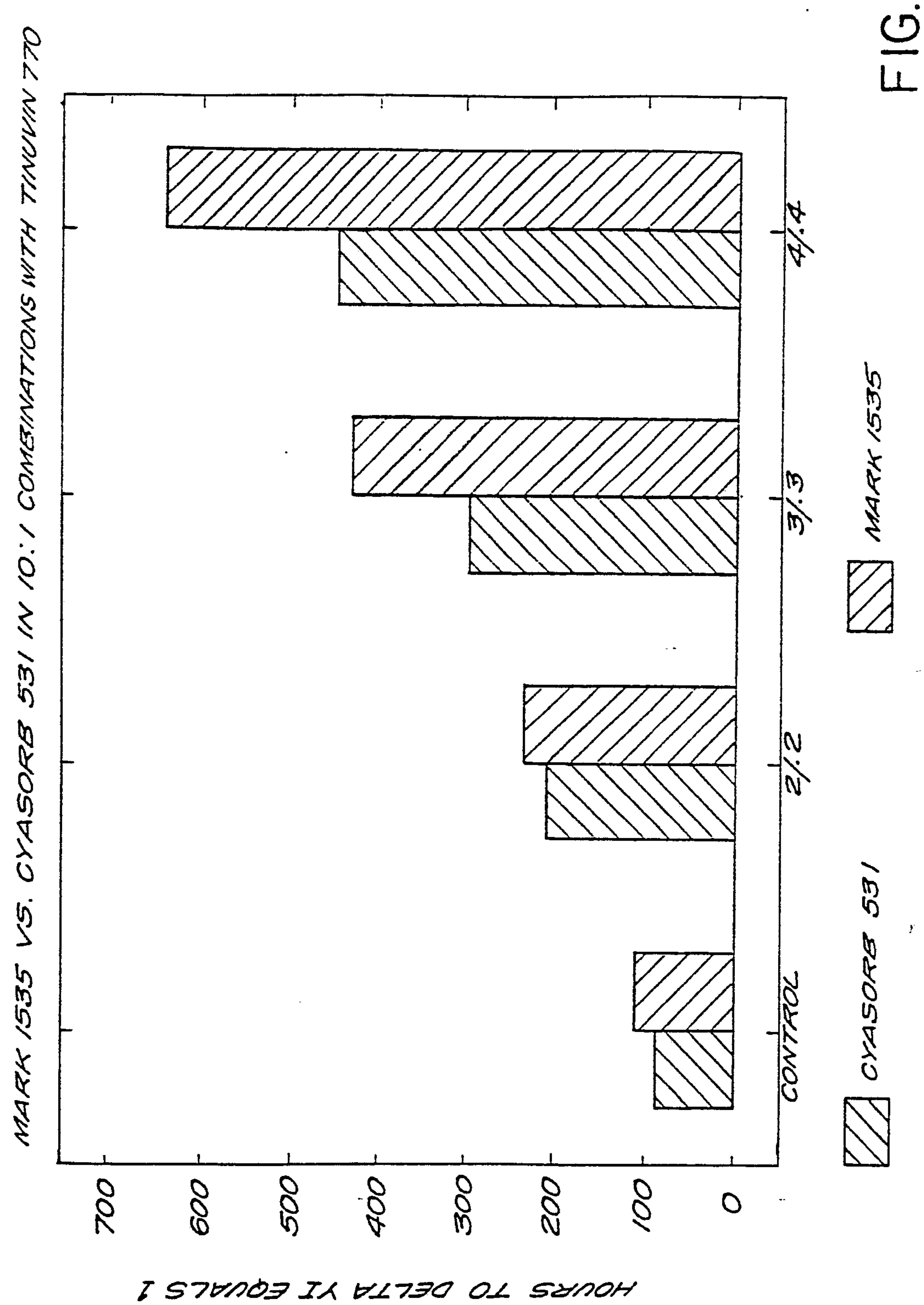
MARK 1535 VS. CYASORB 531 IN 10:1 COMBINATIONS WITH TINUVIN 770
700
600
500
400
300
200
100
0
HOURS TO DELTA YI EQUALS 1
CONTROL
2/.2
3/.3
4/.4
CYASORB 531
MARK 1535

FIG. 5

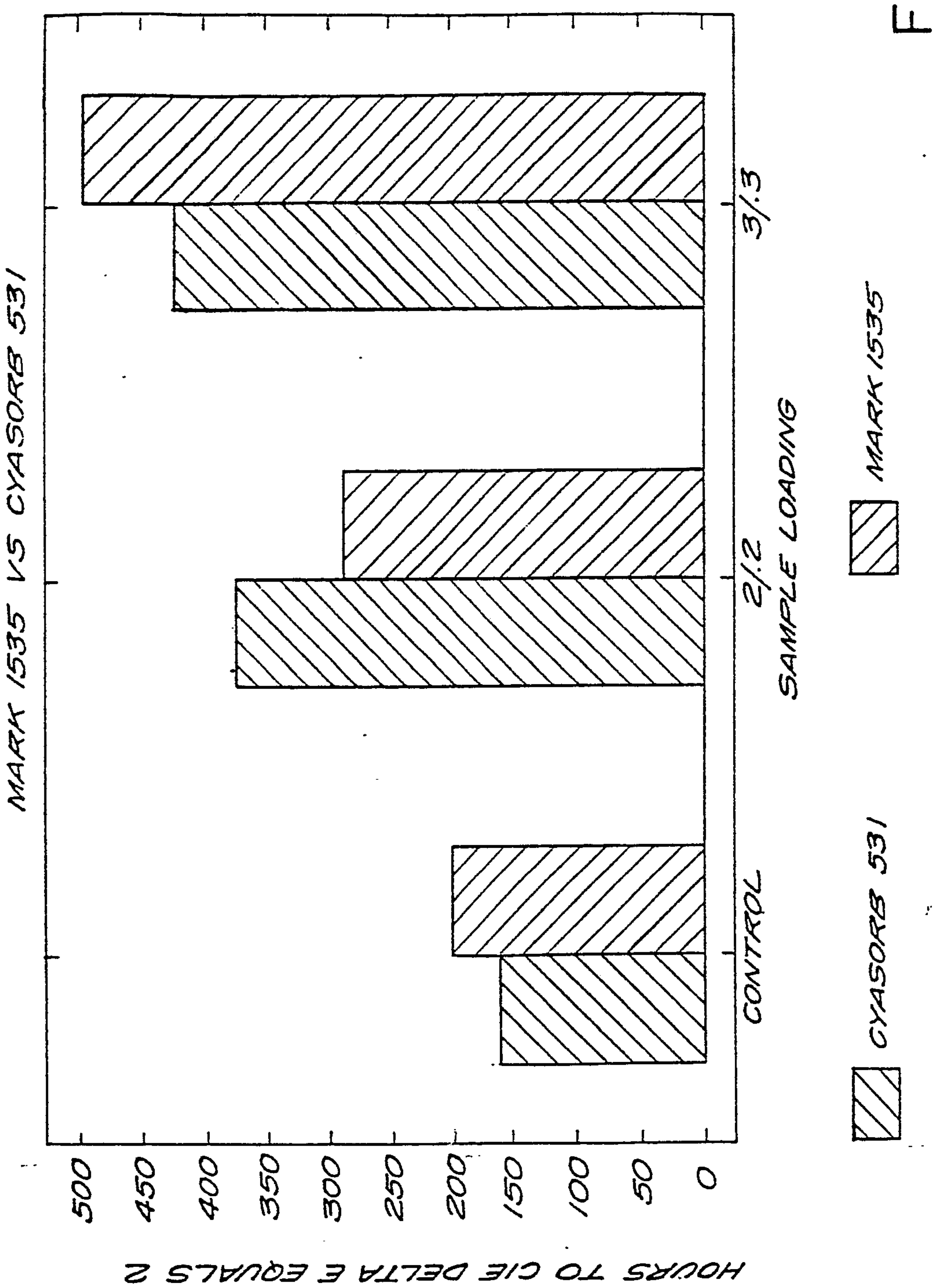
MARK 1535 VS CYASORB 531
HOURS TO CIE DELTA E EQUALS 2
500
450
400
350
300
250
200
150
100
50
0
CONTROL
2/2
3/3
SAMPLE LOADING
CYASORB 531
MARK 1535

FIG. 6